# EUROPEAN PATENT APPLICATION

(11) **EP 0 989 171 A1**
(43) Date of publication of application: **29.03.2000**
(21) Application number: 99118237.9
(22) Date of filing: 14.09.1999
(51) Int. Cl.: C09J 115/00, C08C 19/22

(54) **N-halothio-amide-modified elastomers and their application as adhesives for precured elastomeric substrates**

(30) Priority: 22.09.1998 US 101362 P
(71) Applicant: THE GOODYEAR TIRE & RUBBER COMPANY, Akron, Ohio 44316-0001 (US)
(72) Inventor: Hopper, Roger John, Akron, Ohio 44333 (US); D'Sidocky, Richard Michael, Ravenna, Ohio 44266 (US)
(74) Representative: Leitz, Paul

(57) **Abstract**

New modified elastomers, prepared by reaction of polydiene elastomers with N-halothio-sulfonamides or N-halothio-carboxamides are disclosed. The modified elastomers, diluted with solvents or oils, are applied as an adhesive layer between the surfaces of sulfur-vulcanized elastomeric components and vulcanized to produce an adhesive bond. The process is useful for adhering precured tire treads to cured tire carcasses and is thus applicable in the manufacture of retreaded tires. This invention more specifically discloses an adhesive composition which is comprised of a mixture of a rubbery polymer selected from the group consisting of N-halothio-sulfonamide-modified rubbery polymers and N-halothio-carboxamide-modified rubbery polymers in an oil. The present invention further discloses a laminated rubber article which is comprised of a first rubber layer and a second rubber layer wherein the first rubber layer is adhered to the second rubber layer with a rubbery polymer selected from the group consisting of N-halothio-sulfonamide-modified rubbery polymers and N-halothio-carboxamide-modified rubbery polymers.

## Description

### Background of the Invention

This invention relates to adhesive formulations for adhering precured rubber components together and to novel chemically modified rubbers, methods of their preparation and their use in adhesive formulations.

Tires and other industrial rubber articles such as belts and hoses generally consist of several component parts which are brought together into a final assembly and vulcanized (i.e., cured). In most cases, the components, containing curatives, remain uncured until after final assembly. It has been recognized that if one or more of the individual components were cured prior to final assembly, certain benefits such as improved dimensional uniformity and reduced final cure time would accrue. Obviously, effective adhesion across the interfaces of adjacent components is critical to the performance and durability of the finished products. In practice, adhesion of two uncured components is easier to achieve than adhesion of uncured-to-cured components. Adhesion of two cured components is the most difficult. A substantial body of prior art exists in this area; e.g., G G A Bohm and J F Cetnar, European Patent Application 0713896; Ph.S. Zutavern and R H Schuster, Kautschuk Guymmi Kunststoffe, 51(2), 94(1998); M M Pastor-Blas, M S Sandhez-Adsuar and J M Martin-Martinez in "Polymer Surface Modification: Relevance to Adhesion," K L Mittal, Ed., VSP, Utrecht, The Netherlands, 1996, p 379. One example where effective cured-to-uncured or cured-to-cured adhesion after a final vulcanization is of great importance is in the manufacture of retreaded tires, where either uncured or, more commonly, precured treads are adhered to a cured carcass or casing. These processes and other prior art adhesion technology have been described (D L Bender, Rubber World, 216(1), 26(1997). A variety of surface treatments have been proposed to improve adhesion. These usually involve highly reactive chemicals applied as solutions in volatile solvents or as gases, or exposure to energy sources such as UV, plasma or corona discharge. The costs, safety and environmental implications of such processes has limited their commercial application. Thus, current commercial processes for adhering precured tread to cured carcass usually consist of the following steps:
(1) The carcass is buffed to remove old tread and create a roughened surface, then coated with a rubber cement to provide building tack.
(2) A calendered adhesive sheet, ca. 0.01-0.08 inches (0.25 mm to 2.0 mm) thick (cushion or tie gum) is applied to the carcass.
(3) The precured tread, also coated with a rubber cement, is laid over the tie gum.
(4) The assembled tire is placed in an appropriate curing bag and cured under elevated pressure and temperature in an autoclave.

As described in the prior art cited above, several aspects of this process leave room for improvement. The rubber cements contain volatile organic solvents which must be recovered upon evaporation. The calendered cushion gum, fully compounded with curatives, represents additional manufacturing and storage steps.

Cushion gums are generally stored between plastic sheets to prevent self-sticking and, optionally, under refrigeration to prevent premature cure. Furthermore, the uniform application of such a thin rubber sheet to the carcass requires specialized handling.

An object of this invention is therefore to provide easily pumpable or spreadable formulations for effectively adhering cured components. Such formulations may be a cement containing volatile organic solvents. Preferably, the formulations will contain no volatile organic solvent. Their consistency may range from a liquid to a more highly viscous material (e.g., like a caulking compound), and they are therefore amenable to application by automated equipment. Another object of this invention is to provide adhesive formulations which eliminate the requirement for any special surface treatments other than cleaning and/or buffing. As applied in the retread process example, the adhesive formulation would replace the cushion or tie gum, and, optionally, the need for rubber cements. It is to be understood that the retread process has been featured here for the purposes of illustration and that the formulations of the present invention my be applied wherever adhesion of precured components is desired.

Another object of this invention is to provide novel modified elastomers for use as components of the aforementioned adhesive formulations.

The addition of certain N-halothio-sulfonamides and N-halothio-carboxamides to the olefinic sites of ethylene-propylene-diene termonomer rubber (EPDM) has been described; e.g., R J Hopper, U.S. Patent Nos. 3,915,907; 3,970,133; 4,017,068; 4,820,780; 4,910,266; Rubber Chem Technol 49, 341(1976); Paper No. 37 presented at a meeting of the Rubber Division, American Chemical Society, New Orleans, October 7-10, 1975. Addition of N-chlorothio-sulfonamides to EPDMs containing ethylidene norbornene as the termonomer produced adducts which underwent dehydrochlorination and required the presence of stoichiometric amounts of certain acid acceptors to afford useful products (R J Hopper, U.S. Patent No. 5,756,590). The EPDM adducts were useful as components of ozone-resistant blends with polydiene rubbers, where they imparted superior physical properties. The prior art also describes the additions of various arene- and alkanesulfenyl chlorides to common polydiene elastomers (polyisoprene, polybutadiene, polypiperylene); e.g., G M Buchan and G G Cameron, J. Chem. Soc. Perkin I, 1978, 783; J Berger, Polymer, 1984, 25, 1629; Z G Shamayeva, Yu.B. Monakov, A M Shakirova and G A Tolstikov, Polymer Sci. U.S.S.R., 27(12),2939(1985). In some cases, stable products were obtained while, in others, the products decomposed with evolution of hydrogen chloride. In no case were the products suggested to have any value as components of adhesive formulations.

### Summary of the Invention

In accordance with the present invention, there are provided processes for preparing modified polydiene elastomers by reaction with N-halothio-sulfonamides or N-halothio-carboxamides. The modified elastomers are formulated with solvents and/or oils and, optionally, fillers, antidegradants and curatives, to produce adhesive compositions. Such compositions, when applied to precured rubber components, brought together, and subjected to additional curing under elevated temperature and pressure, can produce an effective adhesive bond between the cured rubber components. Analogous control formulations, wherein the polydiene is unmodified, produce no practical levels of adhesion.

This invention more specifically discloses an adhesive composition which is comprised of a mixture of a rubbery polymer selected from the group consisting of N-halothio-sulfonamide-modified rubbery polymers and N-halothio-carboxamide-modified rubbery polymers in an oil.

The subject invention also reveals a laminated rubber article which is comprised of a first cured rubber layer and a second cured rubber layer wherein the first rubber layer is adhered to the second rubber layer with a rubbery polymer selected from the group consisting of N-halothio-sulfonamide-modified rubbery polymers and N-halothio-carboxamide-modified rubbery polymers.

The present invention further discloses a process for adhering a first cured rubber layer to a second cured rubber layer which comprises bringing the first rubber layer into contact with the second rubber layer wherein an adhesive composition is positioned between the first rubber layer and the second rubber layer and wherein the adhesive composition is comprised of a mixture of a rubbery polymer selected from the group consisting of N-halothio-sulfonamide-modified rubbery polymers and N-halothio-carboxamide-modified rubbery polymers in an oil. This technique is particularly useful in adhering a tread to the carcass of a tire in retreading operations. However, it should be understood that, while the greatest benefits of the present invention are realized in the adhesion of cured rubber layers to cured rubber layers, its use in the adhesion of uncured rubber layers to uncured rubber layers or uncured rubber layers to cured rubber layers is not precluded.

### Detailed Description of the Invention

Unsaturated elastomers suitable for modification by N-halothioamides include the polydienes well known in the industry; ie, natural rubber (NR), polybutadiene (BR), styrene-butadiene (SBR), polyisoprene (IR) and acrylonitrile-butadiene (NBR), styrene-isoprene (SIR) and styrene-isoprene-butadiene (SIBR).

The term N-halothioamide includes N-halothiosulfonamides of the formula: 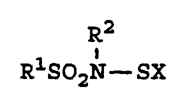 where X is chlorine or bromine, preferably chlorine (N-chlorothio-sulfonamide), where R¹ and R² are selected from the group consisting of alkyl radicals having 1-20 carbon atoms, aralkyl radicals having 7-20 carbon atoms, alkaryl radicals having from 7-20 carbon atoms and aryl and substituted aryl (e.g., haloaryl) radicals having 6-10 carbon atoms and where R¹ is also selected from the radicals having the formula 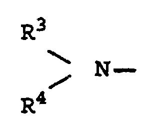 where R³ and R⁴ are individually selected from said alkyl, aralkyl and aryl and substituted aryl (e.g., haloaryl) radicals and where R³ and R⁴ can be joined together to represent radicals selected from

(̵CH₂)̵_{*n*},

where n is an integer of 4 to 7 and

(̵CH₂)̵₂O(̵CH₂)̵₂.

In the practice of this invention, for the N-chlorothio-sulfonamide, R¹ and R² are preferably selected from alkyl radicals having 1 to 6 carbon atoms, phenyl radicals, monoalkyl substituted phenyl radicals having from 7 to 10 carbon atoms and dialkylsubstituted phenyl radicals having from 8 to 11 carbon atoms where such alkyl substituent or substituents are radicals selected from the group consisting of methyl, ethyl and all isomeric forms of propyl and butyl radicals and from the p-chlorophenyl radical.

Representative of radicals suitable for R¹ are radicals selected from methyl, tert-butyl, cyclohexyl, 2-eicosyl, benzyl, 2-(p-n-undecylphenyl)-2-propyl, phenyl, 1-naphthyl, p-tolyl, 3-ethyl-4-(n-dodecyl)phenyl, p-chlorophenyl and 3-chloro-4-(n-butyl)phenyl radicals.

Representative of radicals suitable for R² are methyl, tert butyl, 1-eicosyl, cyclohexyl, benzyl, 1-(p-n-dodecylphenyl)-1-ethyl, phenyl, 1-naphthyl, m-tolyl, 3,4-di-(n-heptyl)phenyl, p-bromophenyl and 3-chloro-4-(n-butyl)phenyl radicals.

Some representative examples of N-chlorothio-sulfonamides which can be used in the present invention are N-chlorothio-N-methylmethanesulfonamide, N-chlorothio-N-methyl-benzenesulfonamide, N-chlorothio-N-methyl-p-toluenesulfonamide, N-chlorothio-N-ethyl-p-toluenesulfonamide, N-chlorothio-N-methyl-ethanesulfonamide, N-chlorothio-N-phenyl-p-toluenesulfonamide, N-chlorothio-N-(2-propyl)-methanesulfonamide, N-chlorothio-N-(1-propyl)-p-chlorobenzenesulfonamide, N-chlorothio-N-phenyl-methanesulfonamide, N-chlorothio-N,N'-N'-trimethylsulfamide, N-chlorothio-N-methyl-N',N'-(pentamethylene)-sulfamide, N-chlorothio-N-methyl-N',N'-diethylsulfamide and N-chlorothio-N-phenyl-benzenesulfonamide.

Representative examples of N-bromothiosulfonamides which can be employed as the N-halothio-sulfonamide in carrying out the process of this invention include N-bromothio-N-methylmethanesulfonamide, N-bromothio-N-methylbenzenesulfonamide, N-bromothio-N-methyl-p-toluenesulfonamide, N-bromothio-N-methylethanesulfonamide, N-bromothio-N-phenyl-p-toluenesulfonamide, N-bromothio-N-(2-propyl)-methanesulfonamide, N-bromothio-N-(1-propyl)-p-chlorobenzenesulfonamide, N-bromothio-N-phenylmethanesulfonamide, N-bromothio-N,N'N'-trimethylsulfamide, N-bromothio-N-methyl,N'N'-(pentamethylene)-sulfamide, N-bromothio-N-methyl-N'N'-diethylsulfamide and N-bromothio-N-phenylbenzenesulfonamide.

Chlorothio-sulfonamides suitable for use as modifiers in the present invention, as well as their preparation, have further been described in the patent literature. For example, West German DPS 1,156,403 shows the preparation of chlorothio-sulfonamides by reaction of a sulfonamide with SCl₂ in the presence of an organic acid acceptor.

West German DPS 1,101,407 shows the preparation of chlorothiosulfonamides from N,N'-dithiobis(sulfonamides) and chlorine or sulfuryl chloride. The chlorothio-sulfonamides of the present invention can be prepared by analogous procedures.

The term N-halothioamide also includes N-halothio carboxamide (and imide) derivatives of the formulae 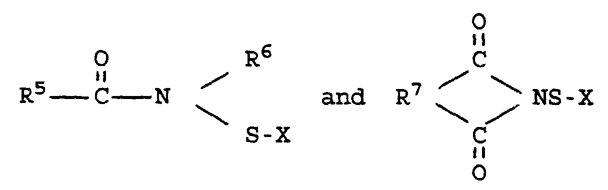 where X is chlorine or bromine, preferably chlorine, where R⁵ and R⁶ are radicals which can be individually selected from alkyl, cycloalkyl, benzyl and phenyl radicals, where R⁵ can additionally be selected from hydrogen, where the aromatic rings of said phenyl and benryl radicals may be substituted with one or two radicals selected from alkyl and chloro radicals, where R⁵ and R⁶ may be taken together to represent an alkylene radical of 3 to 5 carbon atoms and where R⁷ may be an alkylene radical of 2-4 carbon atoms, a 1,2-cycloalkylene radical of 6-8 carbon atoms or an orthophenylene radical of 6 to 8 carbon atoms.

Representative of such alkyl radicals are methyl, ethyl, n-propyl, isopropyl, n-butyl and isobutyl radicals; representative of cycloalkyl radicals are those containing 6 to 8 carbon atoms such as cyclobexyl and cyclooctyl radicals; representative of such phenyl radicals are p-xylyl and 2,4-dichlorophenyl radicals and representative of such benzyl radicals are p-methylbenzyl and p-chlorobenzyl radicals. Representative of various alkylene radicals formed by the joining of R⁵ and R⁶ is the pentamethylene radical. Representative of the alkylene or arylene radicals denoted by R⁷ are ethylene, 1,2-cyclohexylene or orthophenylene radicals.

Representative of various N-halothio-carboxylic acid amides are N-chlorothio-N-cyclohexyl formamide, N-chlorothio-N-phenyl formamide, N-chlorothio-N-(p-chlorophenyl)formamide and N-chlorothio-caprolactam. Representative of N-chlorothio-carboximides is N-chlorothio-phthalimide.

Chlorothio-carboxamides (and imides) suitable for use as modifiers in the present invention, as well as their preparation, have been described in the patent literature; e.g., N-chlorothio-N-cyclohexyl formamide (R J Hopper U.S. Patent 3,997,605), N-chlorothio-caprolactam (J A Taylor, British Patent 1355801) and N-chlorothio-phthalimide (Belgian Patent 816,266).

The synthesis of the modified elastomers of this invention involves the reaction of an N-halothioamide with one of the aforementioned unsaturated elastomers such that an amidothio functionality and the halogen atom become chemically bound to the elastomer. The exact nature of the reaction has not been conclusively established but is believed to initially entail addition to an unsaturated site, as illustrated for the addition of an N-halo thio sulfonamide to polyisoprene 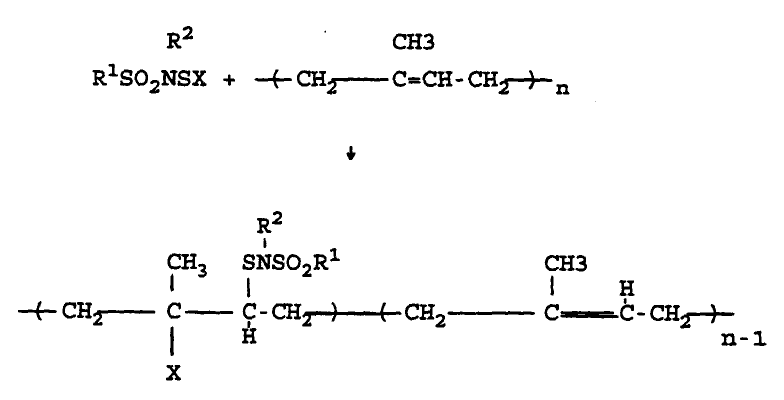 wherein X represents a halogen.

The utility of the invention is, of course, not dependent on the exact structure of the modified elastomer but on its performance in adhesive formulations.

The extent of modification is expressed herein as mol/kg, representing moles of chemically bound N-halothioamide per kilogram of modified elastomer. The preferred extent of modification depends on the specific nature of the elastomer to be modified, the specific nature of the subsequent adhesive formulation and the specific nature of the cured substrates to be adhered and the desired structure of two adhesive bound. The modification level can range from about 0.05 to about 0.50 mol/kg but is preferably in range of about 0.10 to about 0.40 mol/kg and more preferably about 0.25-0.35 mol/kg.

In carrying out the actual modifications, it should be recognized that, with commercial materials, impurities may be encountered which can react with the N-halothioamides, thus reducing reaction efficiency. Such impurities include water, mercaptan chain transfer agents, amines, olefins and certain soaps and antidegradants. For maximum efficiency, such impurities may be removed by known purification techniques. In some circumstances, slightly reduced efficiency may be acceptable and no purification required.

To determine the actual level of modification, a modified elastomer was purified by extraction with acetone and analyzed by one or more of the following methods: Elemental analysis (Cl, N, S), Infrared spectroscopy (absorbance ratio of adduct band to elastomer band), ¹HNMR spectroscopy (intensity ratio of adduct band to elastomer band). By plotting the infrared ratios versus the absolute mol/kg from elemental analysis, calibration curves could be generated which permitted bound modifier levels to be determined directly from the infrared spectra.

The modifications can be carried out in a more or less conventional manner by dissolving the elastomer in an inert solvent, adding the reactive N-halothio amide and stirring in a dry atmosphere until the reaction is complete. Suitable solvents include heptane, hexane, cyclohexane, chloroform, benzene or toluene. Reaction temperatures may range from about 10°C to about 120°C, preferably from about 20°C to about 70°C.

Alternatively, the modifications can be carried out in the absence of a volatile solvent in an internal mixer or extruder. A preferred modification process involves imbibing the elastomer with sufficient oil to produce a material of a consistency mixable in a Sigma-type dough mixer. The reactive N-halothio-amide is then added and mixed to disperse thoroughly. Mixing may be continued or the reaction may be allowed to proceed to completion without further mixing. Suitable oils include commercial rubber processing oils, selected to contain few, if any, components which (as already described) could react with the N-halothioamide. Oils whose viscosities are at the low end of the commercial range are preferred.

For a Sigma-type mixer a range (in parts by weight oil/parts by weight elastomer) of about 2/1 to about 20/1 is preferred. In another preferred embodiment, for improved dispersion and protection from atmospheric moisture, the N-halothioamide is added in a solvent or non-volatile diluent such as a chloroparaffin.

A variation of both the above (solvent and solventless) processes entails first mixing the elastomer with a reinforcing filler under a high shear in a Banbury-type internal mixer or an extruder. This variation is preferred, especially with elastomers other than NR or IR, because the subsequently modified products produce stronger adhesives. This phenomenon is not surprising since it is well known that synthetic elastomers (e.g., BR and SBR) require reinforcing fillers, mixed under high shear, to attain acceptable physical properties.

The modified elastomers of this invention, whether in a solvent or an oil, with or without premixed filler, may be mixed with additional components to produce the final adhesive formulation. Additional components are those commonly used in sulfur vulcanizable rubber recipes; e.g., sulfur or organic sulfur donors, organic vulcanization accelerators, fatty acids, zinc oxide, antidegradants, etc. Such components are well known in the art and are described in "The Vanderbilt Rubber Handbook" (R O Ohm, ed. R T Vanderbilt Co, Norwalk, CT, 1990) or "Rubber Technology" (W Hoffmann, Carl Hanser Verlag, Munich, 1989).

Obviously, a single adhesive formulation will not be optimum for all the potential precured rubber recipes found in commercial practice. Those skilled in the art will recognize that some experimentation will be necessary to develop adhesive formulations which effectively adhere specific cured rubber components. It may be desirable (but not always necessary) that the modified elastomer of the adhesive formulation be the same as an elastomer in the cured rubber components. For example, if the cured rubbers contain polybutadiene, an adhesive formulation based on modified polybutadiene my be preferred. If one cured rubber contains polybutadiene and the other polyisoprene (or NR), an adhesive formulation based on a mixture of modified polybutadiene and modified polyisoprene may be preferred. In some cases, at least one of the cured rubber components contains residual curatives (sulfur accelerators) which migrate into the adhesive formulation and promote cure within the adhesive layer. Under these circumstances, effective adhesion my be obtained with an adhesive formulation which contains only a modified elastomer and solvent and/or oil. In other cases, it may be necessary to add curatives to the adhesive formulation in order to obtain effective adhesion.

Two different peel tests were employed to assess the adhesive bonds formed between precured rubber substrates. In Peel Test I, specimens were prepared from fabric-backed, fully cured rubber strips (2.54 cm x 15.24 cm x 0.318 cm) of specified formulae. The surfaces to be adhered were buffed with 100 grit sandpaper and washed with acetone. The adhesive formulation was applied, weighing before and after application to determine the level of coverage in g/cm². The strips were sandwiched around a 0.01 mm Mylar® mask containing a parallel-sided window which permitted contact of the strips over a defined area. The sandwich was cured under pressure, 70 minutes at 150°C. The specimen was cooled and pulled apart in a T-peel configuration with an Instron machine. For Peel Test II, specimens were prepared from fabric-backed, fully cured rubber strips (2.3 cm x 7.5 cm x 0.254 cm) of specified formulae. The strips were buffed, cleaned and the adhesive formulation applied similarly to Peel Test I. In this test, the Mylar mask contained a triangular window (14 mm base, 50 mm height) positioned with the apex 17 mm from the end of the strips. The sandwiched specimen was cured under pressure as specified in the Examples, then cooled. Instron clamps were attached to the tabs at the apex end of the mask (the mask itself was not clamped). One clamp was suspended from a support frame while the other was fitted with a hook to which weights could be attached. Weights were then applied and the resulting widths of tear measured.

This invention is illustrated by the following Examples which are intended to be representative rather than restrictive of the scope of the invention. In the Examples, specific N-chlorothio-amides employed were N-chlorothio-N-methyl benzenesulfonamide (CTMBS) and N-chlorothio-caprolactam (CTCL).

Also employed in the Examples were commercial elastomers, oils and curatives. Polyisoprene (Natsyn 2200) and polybutadiene (Budene 1208) were supplied by The Goodyear Tire & Rubber Company. The oils and their properties are listed in Table I. Amyl Zimate was from the R T Vanderbilt Co, Inc, and Crystex HS OT-20 (insoluble sulfur, 20% oil) from Flexys America LP.

**Table I**

| **Commercial Rubber Processing Oils** | | | |
|---|---|---|---|
| Properties | ASTM Method | Oil A¹ | Oil B |
| Viscosity, SUS @ 98.9°C | D2161 | 38 | 36 |
| Aniline Point, °C | D611 | 77 | 91 |
| Clay/Gel Analysis, wt % | D2007 | | |
| Asphaltenes | | 0 | 0 |
| Polar Compounds | | 0.3 | 0.1 |
| Aromatics | | 36 | 11 |
| Saturates | | 64 | 89 |
| ¹HNMR spectroscopy showed no significant olefinic hydrogen in Oil A. | | | |

Several recipes representative of cured rubber substrates were used in the peel adhesion tests as outlined in Table II and specified in the Examples. The term phr represents parts by weight normalized to 100 parts of rubber hydrocarbon.

**Table II**

| **Compositions of Cured Rubber Test Substrates** | | | | |
|---|---|---|---|---|
| | Substrate | | | |
| Component (phr) | 1 | 2 | 3 | 4 |
| Plioflex 1712 (SBR) | 68.75 | | 96 | 96 |
| Budene 1207 (BR) | | | 30 | 30 |
| Natural Rubber (NR) | | 100 | | |
| Natsyn 2200 (IR) | 50 | | | |
| N-299 Carbon Black | 50 | | 70 | 70 |
| N-330 Carbon Black | | 50 | | |
| Aromatic Oil | | 4.0 | 14 | 14 |
| Naphthenic Oil | 10 | | | |
| Zinc Oxide | 3.0 | 4.0 | 3.0 | 3.0 |
| Stearic Acid | 2.0 | 3.0 | 2.0 | 2.0 |
| Wingstay 100 | 1.0 | 1.0 | 1.0 | 1.0 |
| Wingstay 300 | | 2.0 | 2.0 | 2.0 |
| CBS | 1.0 | 0.5 | 1.2 | 1.0 |
| MBTS | 0.30 | | | |
| TMTD | | | | 0.1 |
| Sulfur | 1.75 | 2.5 | 1.8 | 2.0 |
| Cure, minutes at 150°C | 34 | 18 | 35 | 31 |

### Example 1

A solution of 75 g polyisoprene in 1250 g of toluene was added to a 1-gallon wide-mouthed jar containing a magnetic stirring bar. To this was added a solution of 0.0224 mole of CTMBS in 60 ml of dichloromethane. The jar was purged with nitrogen, capped, shaken vigorously, then placed on a magnetic stirrer at room temperature. After 3.5 hours, a few mL were removed and analyzed by FTIR, showing 0.19 mol/kg of bound adduct. Mixing was continued an additional 16.25 hours and the product again analyzed by FTIR, showing 0.26 mol/kg of bound adduct versus theory at 0.28 mol/kg. A mixture of 22 g of N-550 carbon black, 230 g of Oil A (Table I) and 80 mL of toluene was dispersed with a Tekmar Model SD-45N mechanical high frequency homogenizer equipped with a G-456 generator head. The dispersion was mixed with the toluene solution of the polyisoprene-CTMBS reaction product and the solvents removed under vacuum. Nominal composition (in phr): 100 polyisoprene, 7.1 reacted CTMBS, 29 N-550, 307 Oil A. Peel Test I: Substrate 1, Table II; coverage, 0.016 g/cm²; peel strength, 111 N/cm.

### Comparative Example 2

A formulation was prepared analogously to Example 1, but without addition of CTMBS in dichloromethane. Nominal composition (in phr): 100 polyisoprene, 30 N-550, 310 Oil A. Peel Test I: Substrate 1, Table II; coverage, 0.016 g/cm²; peel strength, 4.4 N/cm. This example demonstrates that no practical adhesion, as measured by peel strength, is exhibited by a formulation containing unmodified polyisoprene. This example also serves as a Comparative Example for Examples 3-5.

### Example 3

A solution of 16.6 g of polyisoprene in 268 g of toluene was added to a 1-pint wide-mouthed jar containing a magnetic stirring jar. To this was added 4.7 mL of dichloromethane solution containing 0.0053 mol of CTCL. The jar was capped, shaken vigorously, then stirred magnetically at room temperature for 17 hours. A portion was coagulated and washed with acetone, then dried under vacuum. Analysis of the rubbery product gave 0.87 percent chlorine, 0.34 percent nitrogen and 0.99 percent sulfur. Calculated for 0.27 mol/kg bound adduct: 0.97 percent chlorine, 0.38 percent nitrogen and 0.87 percent sulfur. The theoretical modification level was 0.30 mol/kg. A portion of the reacted toluene solution, 102 g, was mixed with a dispersion (prepared with the Tekmar homogenizer) of 1.74 g N-550 carbon black in 18 g of Oil A and 80 mL of toluene. The solvents were then removed under vacuum. Nominal composition (in phr): 100 polyisoprene, 5.8 reacted CTCL, 30 N-550, 310 Oil A. Peel Test I: Substrate 1, Table II; coverage, 0.014 g/cm²; peel strength, 79 N/cm.

### Example 4

Polyisoprene, 150 g, and 45 g of N-550 carbon black were added to a Brabender Prep Mixer (cam blades, 50°C oil jacket) at 50 rpm. After 7 minutes, 50 g of Oil A was added over 11 minutes and the batch mixed 1 additional minute. Upon discharge, the batch was pressed into 1/8 inch thick pancakes in a hydraulic press. A 240 g portion was cut into strips and soaked overnight in 300 g of Oil A. The resulting mixture was further mixed in a stainless steel 650 mL Brabender Sigma mixer, 0.5 hour, to 95 rpm and 55°C. Oil A, 106 g was added over 10 minutes and mixed 70 minutes while cooling to 31°C by circulating cold water through the mixer jacket. A 1.65 M solution of CTMBS in dichloromethane, 28.5 mL, was added over 15 minutes at 70 rpm and subsequently mixed 10 minutes at 35°C. The mixer opening was covered with a polyethylene sheet, purged with nitrogen and the batch allowed to stand overnight, then combined with two similar batches to produce a blend. Nominal composition (in phr): 100 polyisoprene, 7.5 reacted CTMBS, 30 N-550, 310 Oil A. Peel Test I: substrate 1, Table II; coverage, 0.013 g/cm²; peel strength, 94 N/cm.

### Example 5

The product of Example 4 was diluted with additional Oil A. Nominal composition (in phr): 100 polyisoprene, 7.5 reacted CTMBS, 30 N-550, 1536 Oil A. Peel Test I: substrate 1, Table II; coverage, 0.018 g/cm²; peel strength, 88 N/cm.

### Example 6

A 100 g portion of polyisoprene was pressed into a 1/8" thick pancake, cut into strips an soaked 7 days in 270 g of Oil B, producing a single swollen, lumpy mass. A 352 g portion was transferred to the Sigma mixer and mixed at up to 97 rpm with no external jacket cooling until a smooth, lump-free batch (at 50°C) was obtained. A 1.1 g sample was removed as a control. The mixer opening was covered with a polyethylene sheet fitted with a nitrogen inlet and port for reagent addition. The batch was purged with nitrogen for 36 minutes at 60 rpm while cooling with jacket water at 25°C. A solution of 7.0 g CTMBS in 5.0 g Chloroflo-40 (chlorinated paraffin, Dover Chemical Co) was added over 4 minutes at 60 rpm (to 45°C). Mixing was continued 8 minutes, then the rotors and cooling water shut off and the batch allowed to stand in the mixer overnight. A 6.8 g loss occurred due to leakage around the rotor shafts. Mixing was carefully resumed after warming to 50°C. The rotors were jogged and ramped from 3 to 15 rpm, keeping the torque below 1000 m-g. After 25 minutes at 15 rpm, 28 g of Oil B was added in 6 minutes while increasing rotor speed to 40 rpm. Mixing was continued 4 minutes while increasing to 60 rpm. FTIR analysis of the product showed the modified polyisoprene to contain 0.29 mol/kg of bound adduct. The theoretical level was 0.29 mol/kg. Nominal composition (in phr): 100 polyisoprene, 7.4 reacted CTMBS, 5.4 Chloroflo-40, 300 Oil B. Peel Test II: substrate 2, Table II; coverage, 0.011 g/cm²; cured 2 hours at 150°C; peel strength, 179 N/cm.

### Comparative Example 7

The 1.1 gm control sample from Example 6 was employed. Nominal composition (in phr): 100 polyisoprene, 270 Oil B. Peel Test II: substrate 2, Table II; coverage, 0.011 g/cm²; cured 2 hours at 150°C; peel strength, < 7 N/cm.

### Example 8

A modified polyisoprene adhesive formulation was prepared essentially according to Example 3 but with minor variations in the amounts of components. Nominal composition (in phr): 100 polyisoprene, 7.8 reacted CTMBS, 35 N-550, 300 Oil A. Peel Test II: Substrate 3, Table II; coverage, 0.0093 g/cm²; cured 1.75 hours at 150°C; peel strength, 49 N/cm.

### Example 9

An adhesive formulation was prepared as Example 8 except that curatives were added. Nominal composition (in phr): 100 polyisoprene, 7.8 reacted CTMBS, 35 N-550, 300 Oil A, 8.8 Amyl Zimate, 4.4 Crystex HS OT-20. Peel Test II: substrate 3, Table II; coverage, 0.0105 g/cm²; cured 1.75 hours at 150°C; peel strength, 150 N/cm.

### Example 10

The adhesive formulation of Example 9 was employed. Peel Test II: substrate 3, Table II; coverage, 0.0186 g/cm²; cured 1.75 hours at 150°C; peel strength, 172 N/cm.

### Comparative Example 11

An adhesive formulation was prepared as for Example 9 but without having been reacted with CTMBS. Nominal composition (in phr): 100 polyisoprene, 35 N-550, 7.2 Amyl Zimate, 3.7 Crystex HS OT-20. Peel Test II: substrate 3, Table II; coverage, 0.0184 g/cm²; cured 1.75 hours at 150°C; peel strength, 16 N/cm.

### Example 12

A commercial polybutadiene, 32 g, was added to a miniature internal mixer (Haake Rheomix 750) at 50°C and 70 rpm. N-299 carbon black, 16 g, was then added over 7.5 minutes at 70 rpm. The rotor speed was increased to 80 rpm and mixing continued 2 minutes. Finally, 15 g of Oil A was added over 10 minutes and the batch mixed an additional 1.5 minutes to a final temperature of 80°C. The batch was discharged and pressed into a 1/8" thick pancake in a hydraulic press. A 20 g portion of the pancake was cut into strips and mixed with 190 mL of dry toluene until a lump-free solution, 161.7 g, was obtained. To 114.1 g of the solution was added 1.7 mL of a 1.64 M solution of CTMBS in dichloromethane and stirred 4 hours in a closed container at room temperature. An additional 18 g of Oil A was mixed in and the solvents evaporated under vacuum. Nominal composition (in phr): 100 polybutadiene, 9.2 reacted CTMBS, 50 N-299, 300 Oil A. Peel Test II: substrate 4, Table II; coverage, 0.0168 g/cm²; cured 2 hours at 150°C; peel strength, 165 N/cm.

### Comparative Example 13

To 33.9 g of the original toluene solution of Example 12 was added 5.4 g of Oil A and the resulting mixture evaporated under vacuum. Nominal composition (in phr): 100 polybutadiene, 50 N-299, 300 Oil A. Peel Test II: substrate 4, Table II; coverage, 0.0168 g/cm²; cured 2 hours at 150°C; peel strength, < 6 N/cm.

Variations in the present invention are possible in light of the description provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. An adhesive composition which is characterized by being comprised of a mixture of a rubbery polymer selected from the group consisting of N-halothio-sulfonamide-modified rubbery polymers and N-halothio-carboxamide modified rubbery polymers in an oil.

2. An adhesive composition as specified in claim 1 characterized in that the rubbery polymer is an N-halothio-sulfonamide-modified rubbery polymer.

3. An adhesive composition as specified in claim 1 or 2 characterized in that the N-halothio-sulfonamide-modified rubbery polymer is an N-halothio-sulfonamide-modified rubber selected from the group consisting of natural rubber, polybutadiene rubber, styrene-butadiene rubber, polyisoprene rubber, acrylonitrile-butadiene rubber, styrene-isoprene rubber, butadiene-isoprene rubber and styrene-isoprene-butadiene rubber.

4. An adhesive composition as specified in claim 1, 2 or 3 characterized in that the oil is a rubber processing oil.

5. A laminated rubber article which is characterized by being comprised of a first rubber layer and a second rubber layer wherein the first rubber layer is adhered to the second rubber layer with the rubbery polymer specified in any of the preceding claims.

6. A laminated rubber article as specified in claim 5 characterized in that the rubbery polymer is positioned between the first rubber layer and the second rubber layer.

7. A laminated rubber article as specified in claim 6 characterized in that the laminated rubber article is a tire, wherein the first rubber layer is a tire carcass and wherein the second rubber layer is a tire tread.

8. A process for adhering a first rubber layer to a second rubber layer which is characterized by bringing the first rubber layer into contact with the second rubber layer wherein the adhesive composition specified in any of claims 1-4 is positioned between the first rubber layer and the second rubber layer.

9. A process as specified in claim 8 characterized in that the first rubber layer is a tire carcass and wherein the second rubber layer is a tire tread.

10. A process as specified in claim 9 characterized in that the tire carcass is cured.
